# EUROPÄISCHE PATENTSCHRIFT

(11) **EP 1 023 200 B1**
(45) Veröffentlichungstag und Bekanntmachung des Hinweises auf die Patenterteilung: **25.07.2001**
(21) Anmeldenummer: 98955364.9
(22) Anmeldetag: 30.09.1998
(51) Int. Cl.: B60N 2/46

(54) **Armlehne für einen Fahrzeugsitz**
Arm rest for a vehicle seat
Accoudoir pour siège de véhicule

(30) Priorität: 15.10.1997 DE 29718291 U
(43) Veröffentlichungstag der Anmeldung: 02.08.2000
(73) Patentinhaber: GRAMMER AG, 92224 Amberg (DE)
(72) Erfinder: HIMMELHUBER, Erwin, D-92237 Sulzbach-Rosenberg (DE)
(74) Vertreter: LOUIS, PÖHLAU, LOHRENTZ & SEGETH
(86) Internationale Anmeldenummer: DE9802944
(87) Internationale Veröffentlichungsnummer: WO9919166

(56) Entgegenhaltungen:
- WO-A-95/00360
- DE-A- 4 340 516
- DE-A- 4 415 732
- JP-A- 8 002 340
- JP-A- 59 186 749
- US-A- 5 516 191

## Beschreibung

Die Erfindung betrifft eine Armlehne für einen Fahrzeugsitz, die eine Grundschale und einen Deckel aufweist, wobei die Grundschale zur Aufnahme einer Telefonhalterung vorgesehen ist, die an der Grundschale mittels einer Schwenkverbindungseinrichtung zwischen einer in der Grundschale zusammengeklappten Lagerposition und einer aus der Grundschale vorderseitig schräg nach oben herausstehenden Aktivposition verschwenkbar angebracht ist, wobei die Schwenkverbindungseinrichtung eine Stützeinrichtung für den Deckel aufweist, die in der Aktivposition der Schwenkverbindungseinrichtung zur mit der Telefonhalterung mindestens näherungsweise fluchtenden Schräganordnung des Deckels vorgesehen ist, wobei die Schwenkverbindungseinrichtung eine Basis mit einer Schnapp-Rasteinrichtung aufweist, mit welcher die Schwenkverbindungseinrichtung in der Grundschale federnd verrastet ist.

Es ist eine Armlehne für einen Fahrzeugsitz mit einer Grundschale und einem Deckel bekannt, wobei die Grundschale zur Aufnahme einer Telefonhalterung vorgesehen ist. Wenn bei dieser bekannten Armlehne das an der Telefonhalterung befindliche Telefon benutzt werden soll, wird der die Grundschale normalerweise verschließende Deckel aufgeklappt, wonach dann die Telefonhalterung mittels der Schwenkverbindungseinrichtung in die Aktivposition herausgeschwenkt werden kann. Durch den geöffneten Deckel ist zwar der Zugang zur in der Aktivposition befindlichen Telefonhalterung und dem daran vorgesehenen Telefon möglich, der Deckel kann sich jedoch störend bemerkbar machen. Die Telefonhalterung bzw. das an der Telefonhalterung vorgesehene Telefon kragt aus der Grundschale relativ weit heraus, so daß es bei einer entsprechenden Krafteinwirkung auf das Telefon zu Verbiegungen bzw. Beschädigungen der Schwenkverbindungseinrichtung kommen kann.

Eine Armlehne der eingangs genannten Art ist aus der WO-A-95/00360 bekannt. Dort ist in einem Aufnahmegehäuse ein Schlitten längsverschieblich gelagert, an dessen vorderem Ende eine Trägerplatte über Schwenkarme angelenkt ist. In der äußeren Endlage des Schlittens wird die Trägerplatte unter Einwirkung von Federn angehoben und in einer Ebene verriegelt, die im wesentlichen mit der Oberseite eines Fahrzeug-Einbaukörpers fluchtet. Mittels einer an der Trägerplatte angeordneten Lösetaste kann die Verriegelung gelöst und die Trägerplatte auf den Schlitten abgesenkt und zusammen mit diesem in das Aufnahmegehäuse eingeschoben werden. Es sind Mittel vorgesehen, welche die Hubbewegung der Trägerplatte und die Bewegung des Schlittens aufeinander derartig abstimmen, daß eine Kollision zwischen der Trägerplatte und dem Aufnahmegehäuse verhindert wird.

Der Erfindung liegt die Aufgabe zugrunde, eine Armlehne der eingangs genannten Art zu schaffen, bei welcher die Schnapp-Rasteinrichtung zuverlässig gelöst wird, wenn auf die aus der Grundschale herauskragende, in ihrer Aktivposition befindliche Telefonhalterung zu große Kräfte ausgeübt werden, und bei welcher die Schwenkverbindungseinrichtung auch wieder problemlos in der Grundschale federnd festgelegt werden kann.

Diese Aufgabe wird bei einer Armlehne der eingangs genannten Art erfindungsgemäß dadurch gelöst, daß die Grundschale an ihrer Stirnwand ein erstes Loch und am Boden ein zweites Loch aufweist, und daß die Basis der Schwenkverbindungseinrichtung stirnseitig einen in das erste Loch einsteckbaren Einsteckansatz und bodenseitig einen in das zweite Loch im Boden der Grundschale einrastbaren Rastansatz aufweist.

In der Aktivposition der Schwenkverbindungseinrichtung fluchtet der Deckel mit der Telefonhalterung bzw. mit dem an der Telefonhalterung angeordneten Telefon mindestens näherungsweise, so daß es bei Benutzung des an der Telefonhalterung vorgesehenen Telefons möglich ist, den Unterarm der Betätigungshand auf den geeignet schräg positionierten Deckel aufzulegen. Auf diese Weise ergibt sich ein ausgezeichneter Bedienungskomfort. Werden auf die Schwenkverbindungseinrichtung in ihrer Aktivposition, d.h. bei aus der Grundschale herausgeschwenkter Telefonhalterung, unbeabsichtigt oder im Extremfall sogar beabsichtigt bspw. durch ein Kind zu große Kräfte ausgeübt, so wird die Basis der Schwenkverbindungseinrichtung von der Grundschale durch die federnde Schnapp-Rasteinrichtung automatisch gelöst, so daß Verbiegungen bzw. Beschädigungen der Schwenkverbindungseinrichtung zuverlässig verhindert werden.

Bei der erfindungsgemäßen Armlehne ist es zweckmäßig, wenn die Basis stirnseitig ein Federelement aufweist, das vom Einsteckansatz beabstandet gegen die Stirnwand der Grundschale gezwängt ist. Bei diesem Federelement handelt es sich bspw. um eine gebogene Blattfeder. Werden auf die Telefonhalterung in der aus der Grundschale herauskragenden Aktivposition bzw. auf das an der Telefonhalterung angebrachte Telefon zu große Kräfte ausgeübt, so ergibt sich eine Lösung der Schnapp-Rasteinrichtung der Basis der Schwenkverbindungseinrichtung von der Grundschale, d.h. eine Loslösung der Schwenkverbindungseinrichtung mit der Telefonhalterung aus der Grundschale. Um die von der Grundschale getrennte Schwenkverbindungseinrichtung wieder problemlos an der Grundschale federnd festlegen zu können, ist es bevorzugt, wenn die Basis mit eine Werkzeugloch und wenn der Boden der Grundschale mit einer Werkzeugvertiefung ausgebildet ist, die gegeneinander versetzt untereinander vorgesehen sind. Zur federnden Verrastung der Basis der Schwenkverbindungseinrichtung mit dem Boden der Grundschale ist es dann nur erforderlich, bspw. einen Schraubenzieher oder ein anderes geeignetes Werkzeug durch das Werkzeugloch in der Basis in die Werkzeugvertiefung in der Grundschale einzustecken und danach das Werkzeug geeignet zu verschwenken, um die Schnapp-Rastverbindung herzustellen. Dabei wird das an der Stirnseite der Basis vorgesehene Federelement mechanisch gespannt. Wird dann das Werkzeug aus der Werkzeugvertiefung und aus dem Werkzeugloch zurückgezogen, so wird das besagte Federelement entspannt und die federnde Verrastung der Basis der Schwenkverbindungseinrichtung in der Grundschale der Armlehne bewerkstelligt.

Ein Ausführungsbeispiel der erfindungsgemäßen Armlehne ist in der Zeichnung dargestellt und wird nachfolgend beschrieben. Es zeigen:
- Fig. 1: eine schematische Darstellung der Armlehne zur Verdeutlichung ihrer Wirkungsweise bzw. ihres Funktionsprinzipes, und
- Fig. 2: ein konkretes Ausführungsbeispiel in einer der Fig.1 ähnlichen Darstellung.

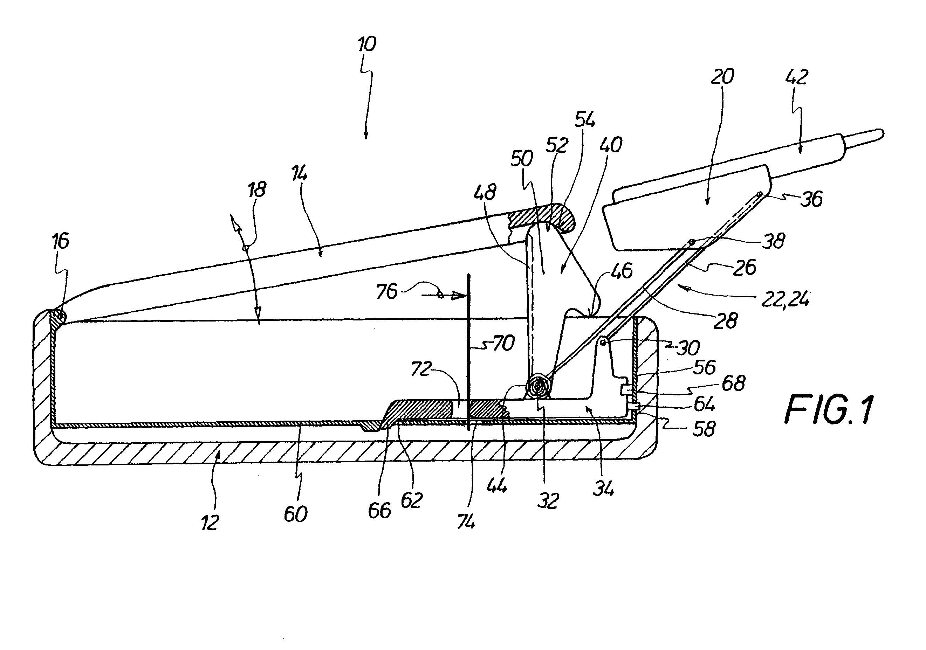

Fig. 1 zeigt schematisch in einer Seitenansicht eine Armlehne 10 für einen Fahrzeugsitz. Die Armlehne 10 weist eine Grundschale 12 und einen Deckel 14 auf. Der Deckel 14 ist um eine Achse 16 zwischen einer die Grundschale 12 verschließenden und einer Öffnungsstellung verschwenkbar, was durch den bogenförmigen Doppelpfeil 18 angedeutet ist. Die Grundschale 12 der Armlehne 10 ist zur Aufnahme einer Telefonhalterung 20 vorgesehen. Die Telefonhalterung 20 ist an der Grundschale 12 mittels einer Schwenkverbindungseinrichtung 22 zwischen einer in der Grundschale 12 platzsparend zusammengeklappten Lagerposition und einer aus der Grundschale 12 vorderseitig schräg nach oben herausstehenden Aktivpositon - die in Fig. 1 angedeutet ist - verschwenkbar angebracht. Die Schwenkverbindungseinrichtung 22 ist als Viergelenkeinrichtung 24 mit zwei Schwenkarmen 26 und 28 ausgebildet. Der Schwenkarm 26 ist mittels einer Achse 30 und der Schwenkarm 28 ist mittels einer Achse 32 an einer Basis 34 schwenkbeweglich angebracht. Der Schwenkarm 26 ist mittels einer Achse 36 und der Schwenkarm 28 ist mittels einer Achse 38 an der Telefonhalterung 20 schwenkbeweglich angebracht. Die Achsen 30, 32, 36 und 38 sind zueinander parallel, d.h. zur Zeichnungsebene der Fig. 1 senkrecht orientiert.

Die Schwenkverbindungseinrichtung 22 weist eine Stützeinrichtung 40 für den Deckel 14 der Armlehne 10 auf. Die Stützeinrichtung 40 dient dazu, den Deckel 14 in der Aktivposition der Schwenkverbindungseinrichtung 22 mit der Telefonhalterung 20 bzw. mit dem an der Telefonhalterung 20 angebrachten Telefon 42 mindestens näherungsweise fluchtend schrägstehend zu positionieren. In dieser Position kann der Benutzer des Telefons 42 seinen Unterarm auf dem Deckel 14 aufliegen lassen, um dann mit der entsprechenden Hand bspw. den Telefon-Wahlvorgang durchzuführen.

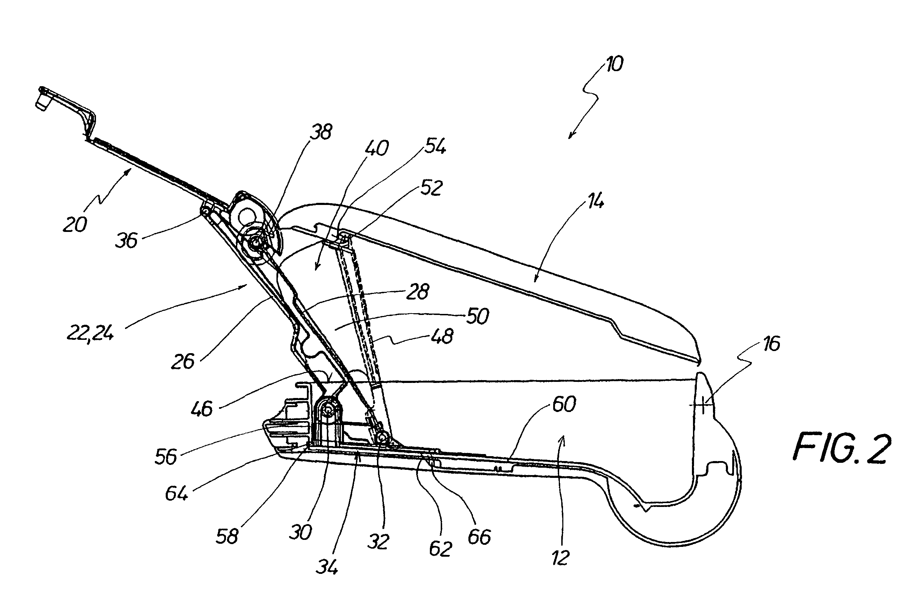

Die Stützeinrichtung 40 für den Deckel 14 ist an der Basis 34 um die Achse 32 herum mittels eines Federelementes 44 federnd verschwenkbar. Mit Hilfe des Federelementes 44 wird die Stützeinrichtung 40 in ihre in Fig. 1 gezeichnete aktive Stützposition aufgeschwenkt. Dieses Aufschwenken der Stützeinrichtung 40 wird durch mindestens einen Endanschlag 46 definiert begrenzt. Die Stützeinrichtung 40 weist ein Grundteil 48 und zwei Seitenwangen 50 auf, die vom Grundteil 48 in die gleiche Richtung wegstehen und die - wie aus Fig. 2 deutlich ersichtlich ist - die Schwenkverbindungseinrichtung 22, d.h. die die Schwenkverbindungseinrichtung 22 bildende Viergelenkeinrichtung 24 großteils überdecken, um einen entsprechenden Schutz zu bilden. In Fig. 2 sind gleiche Einzelheiten mit denselben Bezugsziffern wie in Fig. 1 bezeichnet, so daß es sich erübrigt, in Verbindung mit Fig. 2 alle diese Einzelheiten noch einmal detailliert zu beschreiben.

Wie aus den Figuren 1 und 2 des weiteren ersichtlich ist, weist die Stützeinrichtung 40 für den Deckel 14 mindestens einen Ansatz 52 auf, der an die Innenkontur 54 des Deckels 14 formmäßig angepaßt ist. Hierdurch wird in der schrägorientierten Auflageposition des Deckels 14 ein unerwünschtes Rütteln des Deckels 14 bspw. während der Fahrt des Fahrzeuges vermieden und eine gewünschte Querstabilität erzielt.

Die Figuren 1 und 2 verdeutlichen desweiteren, daß die Grundschale 12 der Armlehne 10 an ihrer Stirnwand 56 mit einem ersten Loch 58 und daß der Boden 60 der Grundschale 12 mit einem zweiten Loch 62 ausgebildet ist. Dementsprechend ist die Basis 34 der Schwenkverbindungseinrichtung 22 mit einem in das erste Loch 58 einsteckbaren Einsteckansatz 64 und vom Einsteckansatz 64 entfernt mit einem in das zweite Loch 62 im Boden 60 der Grundschale 12 einrastbaren Rastansatz 66 ausgebildet. Über dem Einsteckansatz 64 und von diesem beabstandet ist die Basis 34 mit einem Federelement 68 versehen, das gegen die Stirnwand 56 der Grundschale 12 gezwängt ist. Das Federelement 68 ist bspw. von einer gebogenen Blattfeder gebildet, die an der Basis 34 festgelegt ist.

Der Einsteckansatz 64 und der Einrastansatz 66 der Basis 34 und die zugehörigen Löcher 58 und 62 sind derartig dimensioniert, daß sich die Basis 34 bei Ausübung einer zu großen Kraft auf die in der Aktivposition befindliche Telefonhalterung 20 von der Grundschale 12 lösen kann, um Verbiegungen bzw. Beschädigungen der aus der Grundschale 12 herauskragenden Schwenkverbindungseinrichtung 22 zu verhindern. Die von der Grundschale 12 losgelöste Schwenkverbindungseinrichtung 22 kann einfach wieder mit der Armlehne 10 kombiniert werden, indem ein durch eine durchgezogene Linie 70 angedeutetes Werkzeug durch ein Werkzeugloch 72 in der Basis 34 in eine Werkzeugvertiefung 74 im Boden 60 der Grundschale 12 eingesteckt und in Richtung des Pfeiles 76 betätigt wird. Dabei wird das gegen die Stirnwand 56 der Grundschale 12 gezwängte Federelement 68 mechanisch weiter gespannt und der Einrastansatz 66 in das im Boden 60 befindliche zweite Loch 62 eingerastet. Nach diesem Einrasten kann das Werkzeug 70 losgelassen werden, wobei sich das Federelement 68 entsprechend entspannt und die federnde Verrastung des Einrastansatzes 66 im Loch 62 und somit die mechanische Befestigung der Basis 34 der Schwenkverbindungseinrichtung 22 in der Grundschale 12 der Armlehne 10 wieder hergestellt wird.

Wie insbes. in Fig. 1 verdeutlicht ist, sind das Werkzeugloch 72 und die Werkzeugvertiefung 74 gegeneinander derartig versetzt untereinander vorgesehen, daß es möglich ist, ein Werkzeug, bei dem es sich bspw. um einen Schraubenzieher handelt, durch das Werkzeugloch 72 in die Werkzeugvertiefung 74 einzustecken.

## Patentansprüche

1. Armlehne für einen Fahrzeugsitz, die eine Grundschale (12) und einen Deckel (14) aufweist, wobei die Grundschale (12) zur Aufnahme einer Telefonhalterung (20) vorgesehen ist, die an der Grundschale (12) mittels einer Schwenkverbindungseinrichtung (22) zwischen einer in der Grundschale (12) zusammengeklappten Lagerposition und einer aus der Grundschale (12) vorderseitig schräg nach oben herausstehenden Aktivposition verschwenkbar angebracht ist, wobei die Schwenkverbindungseinrichtung (22) eine Stützeinrichtung (40) für den Deckel (14) aufweist, die in der Aktivposition der Schwenkverbindungseinrichtung (22) zur mit der Telefonhalterung (20) mindestens näherungsweise fluchtenden Schräganordnung des Deckels (14) vorgesehen ist, und wobei die Schwenkverbindungseinrichtung (22) eine Basis (34) mit einer Schnapp-Rasteinrichtung (62, 66) aufweist, mit welcher die Schwenkverbindungseinrichtung (22) in der Grundschale (12) federnd verrastet ist,
**dadurch gekennzeichnet,**
daß die Grundschale (12) an ihrer Stirnwand (56) ein erstes Loch (58) und am Boden (60) ein zweites Loch (62) aufweist, und daß die Basis (34) der Schwenkverbindungseinrichtung (22) stirnseitig einen in das erste Loch (58) einsteckbaren Einsteckansatz (64) und bodenseitig einen in das zweite Loch (62) im Boden (60) der Grundschale (12) einrastbaren Rastansatz (66) aufweist.

2. Armlehne nach Anspruch 1,
**dadurch gekennzeichnet,**
daß die Basis (34) stirnseitig ein Federelement (68) aufweist, das vom Einsteckansatz (64) beabstandet gegen die Stirnwand (56) der Grundschale (12) gezwängt ist.

3. Armlehne nach Anspruch 1 oder 2,
**dadurch gekennzeichnet,**
daß die Basis (34) mit einem Werkzeugloch (72) und daß der Boden (60) der Grundschale (12) mit einer Werkzeugvertiefung (74) ausgebildet ist, die gegeneinander versetzt untereinander vorgesehen sind.

## Claims

1. Armrest for a vehicle seat, which has a base shell (12) and a cover (14), the base shell (12) being intended to accommodate a telephone holder (20), which is arranged on the base shell (12) in such a manner that it can be pivoted, by means of a pivoting connection device (22), between a storage position, in which it is folded into the base shell (12), and an active position, in which it projects obliquely upwards out of the base shell (12) at the front side, the pivoting connection device (22) having a support device (40) for the cover (14), which support device, in the active position of the pivoting connection device (22), is intended to arrange the cover (14) so that it is inclined at an angle which is at least approximately aligned with the telephone holder (20), and the pivoting connection device (22) having a base (34) with a snap-action latching device (62, 66), by means of which the pivoting connection device (22) is latched resiliently in the base shell (12), characterized in that the base shell (12), on its end wall (56), has a first hole (58) and on the bottom (60) has a second hole (62), and in that the base (34) of the pivoting connection device (22) on the end side has a plug-in lug (64) which can be plugged into the first hole (58) and on the bottom side has a latching lug (66) which can be latched into the second hole (62) in the bottom (60) of the base shell (12).

2. Armrest according to Claim 1 characterized in that the base (34), on the end side, has a spring element (68) which, at a distance from the plug-in lug (64), is forced against the end wall (56) of the base shell (12).

3. Armrest according to Claim 1 or 2, characterized in that the base (34) is designed with a tool hole (72), and in that the bottom (60) of the base shell (12) is designed with a tool recess (74), which are provided one below the other, offset with respect to one another.

## Revendications

1. Accoudoir pour siège de véhicule, du type se composant d'une coque de base (12) et d'un couvercle (14), la coque de base (12) étant prévue pour recevoir la base d'un téléphone (20) qui est monté de façon à pouvoir basculer sur la coque de base (12), au moyen d'un système de liaison basculable (22) entre une position de repos refermée dans la coque de base (12) et une position active extraite obliquement vers le haut à l'avant de la coque de base (12), la système de liaison basculable (22) comportant pour le couvercle (14) un dispositif d'appui (40) qui, dans la position active du système de liaison basculable (22), est prévu de façon que la base de téléphone (20) soit au moins approximativement au niveau de la position oblique du couvercle (14), et le système de liaison basculable (22) présentant une base (34) comportant un dispositif de mise au repos rapide (62, 66), avec lequel le système de liaison basculable (22) s'accroche élastiquement dans la coque de base (12), **caractérisé en ce que** la coque de base (12) présente dans sa paroi frontale (56) un premier trou (58) et dans son fond (60) un deuxième trou (62), et en ce que la base (34) du système de liaison basculable (22) présente sur son côté frontal un appendice d'insertion (64) pouvant s'insérer dans le premier trou (58) et sur sa base un appendice de repos (66) pouvant s'insérer dans le deuxième trou (62) du fond (60) de la coque de base (12).

2. Accoudoir selon la revendication 1, **caractérisé en ce que** la base (34) présente sur son côté frontal un élément élastique (68) qui est repoussé par l'appendice d'insertion (64) contre la paroi frontale (56) de la coque de base (12).

3. Accoudoir selon l'une des revendications 1 ou 2, caractérisé en ce que la base (34) comporte un trou à outils (72) et en ce que le fond (60) de la coque de base (12) comporte un évidement à outils (74), qui sont prévus pour se déplacer l'un par rapport à l'autre l'un au-dessous de l'autre.
